# EUROPEAN PATENT APPLICATION

(11) **EP 1 876 737 A1**
(43) Date of publication of application: **09.01.2008**
(21) Application number: 06300767.8
(22) Date of filing: 06.07.2006
(51) Int. Cl.: H04B 10/17

(54) **A controlled optical amplifier device and its corresponding feed back control method**

(71) Applicant: Alcatel Lucent, 75008 Paris (FR)
(72) Inventor: KRIMMEL, Heinz Georg, DE 70825, Korntal (DE)
(74) Representative: Kohler Schmid Möbus

(57) **Abstract**

The invention is related to a controlled optical amplifier device that is stabilized in an optical passive network with burst traffic.
The invention proposes a method to stabilize on optical amplifier, wherein a compensation optical source is provided for inputting a compensation laser source signal to the amplifier via its input, the compensation source being controlled with a monitor signal extracted after the output of the amplifier.

## Description

The invention is related to a controlled optical amplifier device that is stabilized in an optical passive network with burst traffic.
The invention proposes a method to stabilize an optical amplifier.

### Background of the Invention

Nowadays, optical transmission lines convey signals, which are wavelength multiplexed. These signals are amplified all along their transmission by optical fiber amplifiers. What is state of the art in transmission will conquer the passive optical access networks too. A Passive Optical Network (PON) is a point to multipoint, fiber to the premises network architecture in which unpowered optical splitters are used to enable a single optical fiber to serve multiple premises, typically 32. A PON consists of an Optical Line Termination (OLT) at the service provider's central office and a number of Optical Network Units (ONUs) near end users. A PON configuration reduces the amount of fiber and central office equipment required compared with point-to-point architectures.

Downstream signals are broadcast to each premise sharing a fiber. Upstream signals are combined using a multiple access protocol, in the currently standardized PON types Time Division Multiplex Access TDMA. The OLTs "range" the ONUs in the time domain in order to provide delay-equalized time slot assignments for upstream communication.

A PON consists of a central office node, called an optical line terminal (OLT), one or more user nodes, called optical network units (ONU) or optical network terminals (ONT), and the fibers and splitters between them, called the optical distribution network (ODN).

The OLT provides the interface between the PON and the metro network. These typically include: - standard time division multiplexed (TDM) interfaces such as SONET/SDH - Internet Protocol (IP) traffic over Gigabit Ethernet and 10Gbit Ethernet.

The ONT terminates the PON and presents the native service interfaces to the user. These services can include voice (plain old telephone services (POTS) or voice over IP), data (typically Ethernet) and video. Often, the ONT functions are separated into two parts: (1) the ONU, which terminates the PON and presents a converged interface - such as xDSL or multiservice Ethernet - toward the user, and (2) network termination equipment (NTE) which provides the separate, native service interfaces directly to the user

A PON is a converged network, in that all of these services are converted and encapsulated in a single packet type for transmission over the PON fiber.

A PON is a shared network, in that the OLT sends a single stream of downstream traffic that is seen by all ONTs. Each ONT only reads the content of those packets that are addressed to it. Encryption is used to prevent unauthorized snooping of downstream traffic. The OLT also communicates with each ONT in order to allocate upstream bandwidth to each node. When an ONT has traffic to send, the OLT assigns a timeslot in which the ONT can send its packets. Because bandwidth is not explicitly reserved for each ONT but allocated dynamically, a PON allows statistical multplexing and oversubscription of both upstream and downstream bandwidth. This gives PON yet another advantage over point-to-point networks, in that not only the fiber but also the bandwidth can be shared across a large group of users, without sacrificing security.

When transmission of signals is performed over an access network, heavy traffic or new premises can make it necessary to reconfigure the network in appropriate locations, thereby changing the number of channels which propagate over optical access lines and which are amplified by optical fiber amplifiers all along said lines.

Optical fiber amplifiers, and more particularly erbium-doped fiber amplifiers, are used since long on optical transmission lines since they do not present gain non-linearity as a function of the power of the input signal at the modulation frequencies of the signals used in telecommunications systems.

The gain recovery time in an erbium-doped fiber amplifier is greater than 0.1 ms. This long recovery time serves to stabilize gain since gain does not have the time to rise when the signal passes from a high state to a low state at the modulation frequencies used in telecommunications which are of the order of 100 MHz to 10 GHz.

Unfortunately, it has been observed that bursty traffic, which is typical for a time-division -multiple access network, present at the input to an optical fiber amplifier has the effect of modulating the optical gain of the optical fiber amplifier since it tends to saturate at the output. The gain of the amplifier varies in transient manner with a higher than the sustainable gain after idle periods and gain slump for succeeding longer bursts.

This phenomenon is troublesome since it means that for a very short length of time, typically several tens of microseconds, the power of the channels actually in use is changed and, unfortunately, that can lead to transmission errors in the final electronic receiver which relies on a mainly constant envelope power when setting the decision threshold. In the prior art there are some proposal to overcome the problem. The US 6,043,931 provides an optical transmission system comprising a transmission line having at least one optical fiber amplifier, wherein a stabilized gain optical amplifier is coupled to the input of the line. The stabilized gain amplifier forms a local oscillator by means of pure-optical feedback suitable for generating an auxiliary dominating wave at a wavelength lambda.loc that lies within the gain band of each optical fiber amplifier of the line. The local oscillation (lasing action) clamps the optical gain following oscillator theory that governs also the payload wavelength gain.

The drawback of that solution is the waste of optical output power available for the payload wavelengths. Given the fact that pumping power and thus saturated output power is precious, the constant stabilizing local oscillation degrades the output power achievable for the payload wavelength.

A solution proposing a hybrid optical/electronic stabilization with a feed-forward compensation scheme using an AC-coupled detection circuit is described in: "EDFA Transient Control Based on Envelope Detection for Optical Burst Switched Networks", An V. Tran et al., IEEE Photonics Technology Letters, Vol. 17, No. 1, January 2005.

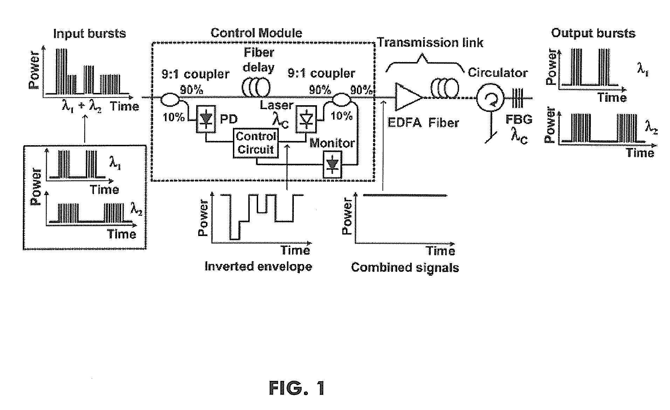

In Fig. 1 the solution of prior art is described: A small fraction of the amplifier's input power is tapped and after optical detection and amplification an additional envelope detector is used to determine the momentary input power levels. The envelope detector eliminates an otherwise necessary DC coupling of the preceding stages to avoid drift and offset errors.

The described method has to detect the input signal power at a separate coupler (still in front of the EDFA element) to establish a feed forward compensation. It thus additionally degrades the noise figure of the EDFA by the additional insertion loss of the input monitor coupler.
The achievable gain stability is a function of the precision of the feed forward path. Here several components with non-uniform and temperature drifting transfer parameters are indispensable and, bottom line, will introduce a gain error.

### Summary of the Invention

This invention teaches to locate the optical sensor of the dynamic gain control loop driving the compensation source, and not the pump laser, at the EDFA output, or more precisely to re-use the commonly implemented output coupler and detector for gain stabilization. There the power level is very much higher, more easily to detect and the (anyhow available) tap coupler does not degrade the noise behaviour of the EDFA element. A feedback loop is formed which reduces the influence of drift, aging and non-uniformity through error feedback.

Other advantages are described in the dependant claims. The solution has the advantage that it can use simpler narrowband electronics and therefore reduces costs. The invention improves gain stabilization precision (low noise detection) and allows higher control bandwidth without noise limits. In addition the invention results in a non-degraded EDFA noise figure by deleted second input coupler (input side tap). The method to stabilize an optical amplifier is easy to implement and allows to immediately use standard commercial EDFAs, as it does not need extra optical taps.

In one embodiment of the invention the envelope detector is eliminated by using low pass filtering and a DC-coupled detector.

### Short Description of the Invention

The invention is described in the following figures and the related description:
Fig.1: Prior art solution
Fig. 2: Embodiment of the invention
Fig: 3: second embodiment of the invention
Fig: 4: third embodiment of the invention

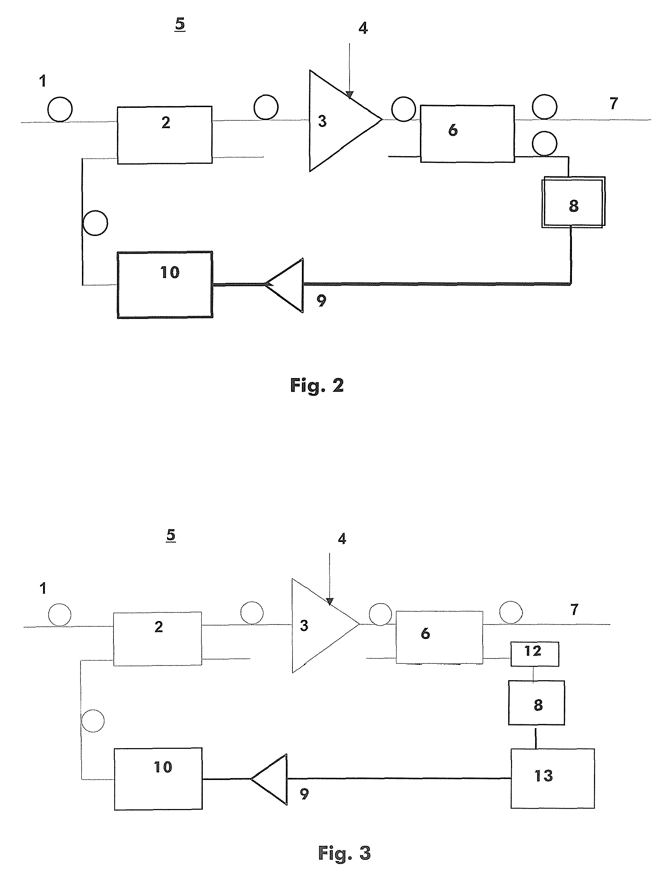

In Figure 2 a schematic device according the invention is shown. An optical fiber 1 is linked via an input-side insertion coupler 2 with an optical amplifier 3. The optical amplifier is connected to a constant-pump-power source 4. At the output side, the optical amplifier feeds the optical amplified signal via an output monitor coupler to the access fiber line 7. The second output of the output monitor coupler is linked to an optical detector 8, normally a photodiode. This detector 8 is connected to a control circuit 9, which is linked to a compensation optical source 10. The compensation optical source outputs the signal into the second input of the input-side insertion coupler 2.

The optical signal is fed into the optical amplifier. There is only a single input-side coupler which does not have to tap a significant part of the input signal for measurement. This is an advantage for the input power is low and to result in a reasonable value. Prior art has to tap about 10% of the weak input signal. Assuming that in the input of an amplifier in a PON only e.g. - 30 dBm optical power are available, the electronics had to deal with a small signal of 100 nA.

The input signal in the invention solution is amplified in the optical amplifier 3, which is an Erbium doped amplifier type. To implement the invention every other type of optical amplifier with similar temporal gain dynamics can be used. The optical amplifier includes an own pump source 4, which pumps the amplifier independent from the external control signals. The internal pump source 4 can be also controlled as it is usually done in commercial amplifiers to compensate aging effects and temperature degradation. This internal control loop of the amplifier 3 is independent from the control to maintain constant input and thus constant gain in a burst signal environment. Intervention on the pump path for other reasons (shutdown) can however be necessary. The output of the optical amplifier is dependent from the signal power of the input signal. The output monitor coupler 6 taps a part of the output signal. For signal levels are higher by the gain factor at the output side of the optical amplifier 3, only a small part of the signal around 0.1 to 1 % of the power may be tapped and the signal is still strong enough to be easily detected.
The optical detector 8 converts the optical signal level into an electrical signal. A common photo diode used as optical detector has a reaction characteristic that results in DC current denoting the average power of the optical output signal in high bit rates. In the case the invention is applied in a low bit rate system it is necessary to add a low pass filter to get the average DC signal after the photodiode. The low pass filter is not necessarily a separate filter. The low pass filter function is also available in a PIN photodiode or in a transimpedance amplifier. The electrical signals are amplified in a common operational amplifier and used in the control circuit 9 to generate the control signal for the compensation optical source 10. The result is an analog driver voltage signal, which steers between 0 and the maximum driver voltage of the compensation optical source. In another embodiment the control circuit 9 is a multi position controller, applying not a continuous driver voltage signal but pre defined levels sufficient to drive the compensation light source.
The control unit and the operation amplifier are low cost components for they need to handle narrowband signals only, as compared to the burst and data signal spectral bandwidth.

The optical compensation source is a laser emitting a wavelength located within the amplification spectrum of the optical amplifier but sufficiently apart from the payload wavelengths to be subsequently filtered in the wavelength domain. This laser can be a normal commercial laser source without special request in view of spectral purity and stability.

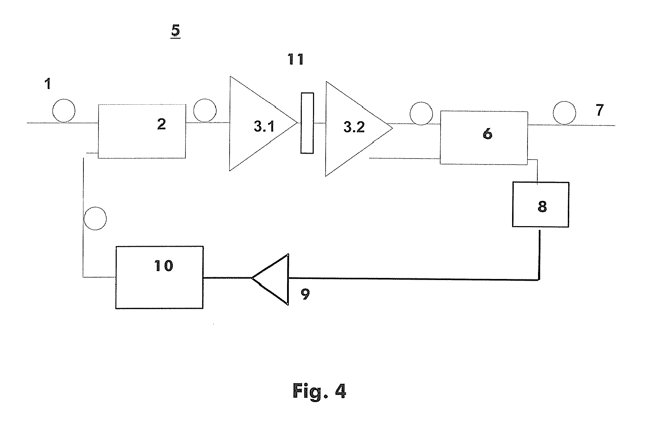

A further embodiment is described in Fig. 3: The solution has the same structure as the solution in Fig. 4. The input signals are DWDM signals with a grid space between the channels of 50 GHz. The difference in this embodiment is an optical coupler and filter 12 that is separating the wavelengths present in the EDFA before separate detection. The filter 12 is followed by the detector 8 that is in this embodiment a photodiode array able to detect the separated wavelengths for the payload signal and the compensation light. In a processing unit 13 the received signals are processed band and/or single signal wise. The single signals or bands are used by weighting them to balance the flatness of gain of the optical amplifier. The processing unit 13 is an embodiment with a digital controller using A/D (analog/digital) converted signals for further calculation. According an internal algorithm the signal to drive the compensation light source is calculated. Especially for a wavelength grid in a DWDM signal the separated measured channel power levels are the basis to calculate the power level of the compensation light source under the condition to have a flat gain response of the optical amplifier. After a D/A-conversion the driver current is adapted to drive the compensation light source.

The position of the output monitor coupler in the PON is after the optical amplifier in direction of the upstream signal, but the monitor output signals can be tapped close to the optical amplifier or remote from the amplifier in direction of upstream. The output monitor coupler is in this embodiment relocated in direction of the OLT of the network. This insures in addition that the power supply is secured. Especially for cascaded amplifiers in a line it makes sense to apply the feed back control on all of them.

In another embodiment of the invention, Fig. 4, a double stage amplifier is used to amplify upstream signals. In commercial available amplifiers the mid stage access can be used to implement a DCM (Dispersion Compensation Module). For the invention the mid stage connection is used also to implement a filter 11 able to suppress ASE (Amplified Stimulated Emission). The compensation light must travel in this configuration to the second stage of the amplifier not to interrupt the control loop.
An alternative configuration is to operate the first stage without a feed back control: the input signal is small and the resulting ASE is high to stabilize. This ASE is filtered out. The second stage is a feedback stabilized amplifier as described as single-stage before.

The method to stabilize the optical amplifier gain starts with measurement of the mean optical output power as a narrowband signal with a temporal resolution in the order of the time constants of the amplifier gain response. This signal is then inverted in polarity and amplified in such a way that, taking into account the subsequent coupling ratios and conversion constants of the laser, a constant sum signal is provided to the amplifier input. Since burst input powers vary depending on their origin in the network, an analog compensation is required. The result is an analog driver voltage signal, which steers between 0 and the maximum driver voltage of the compensation optical source. The combined signal of payload and compensation wavelength ideally is constant within the gain bandwidth of the amplifier medium.

## Claims

1. A controlled optical amplifier device (5) comprising a input line (1) and a output line (7) with an optical amplifier (3) with a compensation optical source (10), which is controlled via a control circuit (9), wherein an output monitor coupler (6) taps a part of the output signal and the control circuit (9) generates a laser driver signal for a compensation optical light source, **characterized in that** the compensation laser source signal is fed in the input line (1) via an input side insertion coupler (2) before the optical amplifier (3) and that the output monitor coupler (6) extracts a monitor signal after the optical amplifier (3) in direction of traveling light.

2. A controlled optical amplifier device (5) according claim 1 **characterized in that** the output monitor coupler (6) is coupled to a filter function (12) to separately extract the power levels of the payload and the compensation signal.

3. A controlled optical amplifier device (5) according claim 1 **characterized in that** the optical amplifier (3) is a multistage amplifier (3.1, 3.2) and a mid stage filter blocks the spontaneous emission (ASE).

4. A controlled optical amplifier device (5) according claim 1 **characterized in that** the detector (8) includes a low pass filter function.

5. A controlled optical amplifier device (5) according claim 1 **characterized in that** the output monitor coupler (6) is positioned remote from the amplifier in the network (OLT).

6. Method for controlling the gain of an optical amplifier device (5) operated in burst mode, including an optical amplifier (3), in which the gain is held constant by adding a compensation light signal ahead of the input of the optical amplifier (3), where the compensation light signal is controlled by tapping the amplified overall light at the output of the optical amplifier and used for controlling the compensation light signal such that the optical gain is held constant.

7. Method for controlling the gain of an optical amplifier device (5) according claim 6, **characterized by** tapping the payload signals and compensation signal separately.

8. Method for controlling the gain of an optical amplifier device (5) according claim 6, **characterized** using a processing means 13 to process payload signals and compensation light signal.

## Amended claims

### Amended claims in accordance with Rule 137(2) EPC.

**1.** A controlled optical amplifier device (5) for burst traffic comprising a input line (1) and a output line (7) with an optical amplifier (3) with a compensation optical source (10) for adding a compensation light signal to a payload signal ahead of the input of the optical amplifier (3),
wherein the compensation optical source (10) is controlled via a control circuit (9),
wherein an output monitor coupler (6) taps a part of the output signal and the control circuit (9) generates a laser driver signal for the compensation optical source (10), wherein the compensation laser source signal is fed in the input line (1) via an input side insertion coupler (2) before the optical amplifier (3), and wherein the output monitor coupler (6) extracts a monitor signal after the optical amplifier (3) in direction of traveling light, **characterized in that**
the control circuit (9) controls the compensation optical source (10) such that a constant sum signal is provided to the input of the optical amplifier (3).

**2.** A controlled optical amplifier device (5) according claim 1 **characterized in that** the output monitor coupler (6) is coupled to a filter function (12) to separately extract the power levels of the payload and the compensation signal.

**3.** A controlled optical amplifier device (5) according claim 1 **characterized in that** the optical amplifier (3) is a multistage amplifier (3.1, 3.2) and a mid stage filter blocks the spontaneous emission (ASE).

**4.** A controlled optical amplifier device (5) according claim 1 **characterized in that** the detector (8) includes a low pass filter function.

**5.** A controlled optical amplifier device (5) according claim 1 **characterized in that** the output monitor coupler (6) is positioned remote from the amplifier in the network (OLT).

**6.** Method for controlling the gain of an optical amplifier device (5) operated in burst mode, including an optical amplifier (3), in which the gain is held constant by adding a compensation light signal to a payload signal ahead of the input of the optical amplifier (3), **characterized in that** the compensation light signal is controlled by tapping the amplified overall light at the output of the optical amplifier for generating a driver voltage signal used for controlling the compensation light signal such that a constant sum signal is provided to the input of the optical amplifier (3).

**7.** Method for controlling the gain of an optical amplifier device (5) according claim 6, **characterized by** tapping the payload signals and compensation signal separately.

**8.** Method for controlling the gain of an optical amplifier device (5) according claim 6, **characterized** using a processing means (13) to process payload signals and compensation light signal.
